# EUROPEAN PATENT APPLICATION

(11) **EP 3 995 807 A1**
(43) Date of publication of application: **11.05.2022**
(21) Application number: 20206259.2
(22) Date of filing: 06.11.2020
(51) Int. Cl.: G01N 1/28, G01N 15/14, G01N 21/45, G01N 1/40, G01N 15/10

(54) **ANALYSIS OF TISSUE SAMPLES USING QUANTITATIVE PHASE-CONTRAST MICROSCOPY**

(71) Applicant: Technische Universität München, 80333 München (DE)
(72) Inventor: Hayden, Oliver, 85368 Moosburg (DE); Peschke, Katja, 80639 München (DE); Reichert, Maximilian, 81675 München (DE); Klenk, Christian, 85667 Oberpframmern (DE); Knolle, Percy, 81735 München (DE); Höchst, Bastian, 82067 Ebenhausen-Schäftlarn (DE)
(74) Representative: Lucke, Andreas

(57) **Abstract**

Disclosed herein is a method of analyzing a tissue sample using a quantitative phase-contrast microscope as well as a corresponding microfluidic system and a corresponding device. The method comprises providing the tissue sample in a sample volume of a microfluidic system, wherein the tissue sample comprises a plurality of biological cells forming a continuous tissue material. At least a part of the tissue sample is dissolved into single cells and/or cell aggregates in a carrier fluid in the sample volume. A flow of the carrier fluid is generated from the sample volume to a measurement volume of the microfluidic system and a first phase shift image of the single cells and/or cell aggregates in the measurement volume is taken with the quantitative phase-contrast microscope.

## Description

### FIELD OF THE INVENTION

The present invention is in the field of biomedical research and clinical diagnostics. In particular, the invention relates to a method of analyzing a tissue sample using a quantitative phase-contrast microscope as well as to a corresponding microfluidic system and a corresponding device.

### BACKGROUND

Digital holographic microscopy uses interference between an imaging beam and a reference beam to obtain phase as well as amplitude information of light transmitted by a sample and for example allows for reconstructing a quantitative phase shift image of the sample, see e.g. EP 1524 491 A1 and EP 2 357 539 A1. In recent years, digital holographic microscopes have successfully been employed for biomedical applications such as live cell imaging. Phase shift images of cells may be used to reliably identify cell types based on the analysis of morphological parameters and/or using machine learning classifiers. In combination with microfluidic systems, this for example allows for performing high-throughput label-free blood sample analyses such as blood counts, see e.g. US 2019/0195774 A1, facilitating the detection of diseases like malaria, leukemia, and myeloproliferative neoplasms, see for example M. Ugele et al., Adv. Sci. 1800761 (2018*),* WO 2019/063548 A1, and M. Ugele et al., Proc. SPIE 11060, Optical Methods for Inspection, Characterization, and Imaging of Biomaterials IV, 110600V (2019*).*

While digital holographic microscopes maybe used to study cells in a liquid sample or in cell cultures including two-dimensional or three-dimensional tumor models, it is not suitable for studying larger samples such as biopsy samples. The latter constitute an important diagnostic tool for many diseases, e.g. pancreatic cancer, for which tissue samples may for example be extracted by endoscopic ultrasound-guided fine-needle aspiration (EUS-FNA) biopsy. These samples are typically analyzed by various cytopathologic and histopathologic techniques to obtain a diagnosis. These analyses, however, are slow and costly and moreover may not yield an unambiguous result in some cases, e.g. in up to 25% of cases for pancreatic cancer.

### SUMMARY OF THE INVENTION

It is thus an object of the invention to provide a fast and reliable method for analyzing tissue samples with digital holographic microscopes.

This object is met by a method of analyzing a tissue sample using a quantitative phase-contrast microscope according to claim 1, a microfluidic system according to claim 7, and a device according to claim 10. Embodiments of the present invention are detailed in the dependent claims.

The method of analyzing a tissue sample using a quantitative phase-contrast microscope according to the invention comprises providing the tissue sample in a sample volume of a microfluidic system, wherein the tissue sample comprises a plurality of biological cells forming a continuous tissue material. At least a part of the tissue sample is dissolved into single cells and/or cell aggregates in a carrier fluid in the sample volume. A flow of the carrier fluid is generated from the sample volume to a measurement volume of the microfluidic system and a first phase shift image of the single cells and/or cell aggregates in the measurement volume is taken with the quantitative phase-contrast microscope.

The tissue sample may for example be a biopsy sample which has been extracted from a patient, e.g. as detailed below. The tissue sample may for example have a size between 0.2 mm and 2 mm in every direction and/or a volume between 0.01 mm³ and 10 mm² and may e.g. contain on the order of 10⁶ to 10⁹ cells. The cells form a continuous tissue material, which may e.g. comprise the cells and an extracellular matrix linking the cells to each other to form a tightly-joined structure.

The tissue sample may for example be provided by placing the tissue sample in the sample volume of the microfluidic system, e.g. through an insertion opening of the sample volume. In some embodiments, the tissue sample may be placed in the sample volume immediately after extracting the tissue sample, for example by inserting a biopsy needle containing the tissue sample into the sample volume and releasing the tissue sample from the biopsy needle. In some examples, providing the tissue sample may comprise rinsing the tissue sample prior to or after providing the tissue sample in the sample volume, e.g. to remove non-tissue cells such as blood cells. After providing the tissue sample in the sample volume, the sample volume may be closed, e.g. by sealing off the insertion opening with a cover member.

The microfluidic system may for example be or comprise a microfluidic chip with a substrate in which the sample volume and the measurement volume are formed, e.g. together with a transport channel connecting the sample and measurement volumes. In other examples, the microfluidic system may comprise multiple elements, e.g. a sample chamber enclosing the sample volume, a measurement chamber enclosing the measurement volume and a tube or channel connecting the sample chamber to the measurement chamber. In some examples, the microfluidic system may be a microfluidic system according to one of the embodiments of the invention described below.

Subsequently, the tissue sample in the sample volume is dissolved in the carrier fluid at least in part, thereby separating a plurality of single cells and/or cell aggregates from the tissue sample. The cell aggregates may for example be small clusters of cells adhering to each other, e.g. clusters comprising between 2 and 20 cells, whereas the single cells do not adhere to any other cells from the tissue sample anymore. The carrier fluid may for example be an aqueous solution, e.g. an isotonic solution, and may be provided in the sample volume prior to, when or after providing the tissue sample. The carrier fluid may comprise oxygen and/or cellular nutrients for the cells in the tissue sample. Additionally or alternatively, the carrier fluid may comprise imaging markers for labelling cells, e.g. as detailed below.

In a preferred embodiment, the tissue sample is dissolved by enzymatic digestion. The carrier fluid may for example comprise one or more enzymes for the enzymatic digestion of the tissue sample, e.g. by adding a dissolving fluid or substance comprising the one or more enzymes to the carrier fluid. The dissolving fluid or substance may be added to the carrier fluid prior to or after providing the carrier fluid in the sample volume. In other examples, the dissolving fluid or substance may be provided in the sample volume independent of the carrier fluid, e.g. prior to providing the carrier fluid. The one or more enzymes may comprise one or more digestive enzymes that are configured to break down macromolecules, e.g. one or more proteases. The one or more enzymes may for example comprise one or more collagenases, e.g. collagenase type II, and/or trypsin.

Additionally or alternatively, the tissue sample may for example be dissolved by applying ultrasound to the tissue sample. The ultrasound may for example be applied via a sonotrode that is in contact with or mechanically coupled to the microfluidic system, in particular to a sidewall of the sample volume or a cover member for the insertion opening. Additionally or alternatively, the ultrasound may for example be generated by an ultrasonic transmitter comprised in the microfluidic system. A frequency of the ultrasound may for example be between 10 kHz and 10 MHz.

A flow of the carrier fluid is generated from the sample volume to the measurement volume of the microfluidic system in order to transport the single cells and/or cell aggregates separated from the tissue sample to the measurement volume. The carrier fluid flow may be generated while and/or after dissolving the tissue sample and may be a continuous flow or a pulsed flow. The pulsed flow may e.g. comprise an alternating sequence of periods in which the carrier fluid flow is generated and maintained and periods in which the flow is stopped, e.g. to further dissolve the tissue sample before transporting the single cells and/or cell aggregates to the measurement volume.

A first phase shift image of the single cells and/or cell aggregates in the measurement volume is taken using the quantitative phase-contrast microscope. As used herein, a phase shift image may encode a phase shift of light at one or more wavelengths as a function of position, e.g. a phase shift of light reflected off or propagating through a sample as a function of the position in the sample. The first phase shift image may e.g. quantify the phase shift of light propagating through the measurement volume along an optical axis of the microscope. In some embodiments, the method may comprise taking a plurality of phase shift images, e.g. as detailed below. In one example, a continuous video stream of phase shift images may be recorded.

Preferably, the quantitative phase-contrast microscope is configured to determine an absolute value of the phase shift. In other examples, the microscope may only be configured to determine the phase shift modulo 2π. The microscope may for example be configured to obtain the phase shift through interference of light, e.g. between a probe or imaging beam and a reference beam. In a preferred embodiment, the microscope is a digital holographic microscope, e.g. as detailed below.

By dissolving the tissue sample into single cells and/or cell aggregates in a carrier fluid, the method according to the invention provides constituents of the tissue sample in a form that is suitable for analysis with quantitative phase-contrast microscopes and in particular digital holographic microscopes, thereby allowing for a fast and reliable determination of the type and/or morphology of cells in the tissue sample for example. This may e.g. be advantageous for diagnosing diseases such as pancreatic cancer since no additional sample preparation and/or analysis steps such as staining or DNA sequencing are required. Furthermore, more reliable and extensive information regarding the state of the disease may be obtained than with cytologic or histopathologic methods, e.g. about the cellular composition of the tissue sample or regarding the degree of differentiation of the cancer. Moreover, by performing the respective steps within the same microfluidic system used for the microscopic imaging, the method can be employed for automated high-throughput analyses - in contrast to conventional sample preparation techniques, which have for example been employed for the flow cytometric analysis of endobronchial biopsy samples as in F. Baharom et al., J. Vis. Exp. (119), e55222 (2017*)* and involve a plurality of sample preparation and transfer steps in/between multiple devices. Furthermore, time-resolved measurements may be performed as detailed below, which may allow for a spatially resolved analysis of the tissue sample.

In some embodiments, the method may comprise moving the tissue sample in the sample volume while dissolving the tissue sample. In particular, the tissue sample may be moved relative to an outlet of the sample volume that is in fluid communication with the measurement volume. In this way, cells originating from different parts of the tissue sample, e.g. a part of the tissue sample that is adjacent to the outlet, may selectively be transported to the measurement volume and analyzed with the quantitative phase-contrast microscope. In a preferred embodiment, the tissue sample is moved at an angle relative to a flow direction of the carrier fluid in the sample volume, e.g. at an angle between 45° and 135°, in one example perpendicular to the flow direction of the carrier fluid in the sample volume. For example, a flow of the carrier fluid may be generated from an input channel via the sample volume to a transport channel connecting the sample volume to the measurement volume. The tissue sample may be moved relative to the openings of the input and transport channels in the sample volume such that different parts of the tissue sample are exposed to the carrier fluid flow.

The first phase shift image of the single cells and/or cell aggregates in the measurement volume may for example be taken when the tissue sample is at a first position relative to the outlet of the sample volume. The carrier fluid flow to the measurement volume may thus predominantly contain cells from the part of the tissue sample that is adjacent to the outlet of the sample volume and/or exposed to the carrier fluid flow when the tissue sample is at the first position. The method may further comprises taking additional phase shift images of the single cells and/or cell aggregates in the measurement volume when the tissue sample is at different positions relative to the outlet of the sample volume. For example, a second phase shift image of the single cells and/or cell aggregates in the measurement volume is taken when the tissue sample is at a second position relative to the outlet of the sample volume, the second position being different from the first position. Preferably, a plurality of phase shift images of the single cells and/or cell aggregates in the measurement volume is taken, wherein the tissue sample is at a respective position relative to the outlet of the sample volume for each of the phase shift images, e.g. by sequentially moving the sample in predetermined steps. Thereby, a spatially resolved analysis of the tissue sample along the direction of motion may be performed, e.g. along a longitudinal extent of the tissue sample. In some embodiments, the sample volume and/or the measurement volume may be rinsed between the first and second phase shift images.

Additionally or alternatively, the method may comprise taking multiple phase shift images at different points in time while the tissue sample is at the same position. For example, the first phase shift image may be taken at a first point in time while dissolving the tissue sample and the method further comprises taking a third phase shift image of the single cells and/or cell aggregates in the measurement volume at a second point in time while dissolving the tissue sample. The tissue sample may be at the same position when taking the first and third phase shift images, e.g. at the first position, i.e. the tissue sample may not be moved between the first and second points in time. As the tissue sample is continuously dissolved between the first and second points in time, cells contained in the sample fluid flow at the first time may originate from an outer portion or layer of the tissue sample, e.g. the outer surface of the tissue sample as provided initially, whereas cells contained in the sample fluid flow at the second time may originate from an inner portion or layer of the tissue sample, e.g. a portion that is initially covered by the outer surface of the tissue sample. This may for example allow for a spatially resolved analysis of the tissue sample along a radial extent of the tissue sample, e.g. from the outer surface of the tissue sample to a core of the tissue sample. In some embodiments, the sample volume and/or the measurement volume may be rinsed between the first and third phase shift images. In some embodiments, a plurality of phase shift images of the single cells and/or cell aggregates in the measurement volume is taken without moving the tissue sample in between, e.g. until the tissue sample has been dissolved completely. In some examples, the method may further comprise moving the sample and taking one or more phase shift images when the sample is at a different position, e.g. as described above. In one example, the sample is repeatedly moved between two or more positions, e.g. the first and second positions, while dissolving the sample. A phase shift image may be taken whenever the sample is at one of the two or more positions. Thereby, spatially resolved information along a longitudinal extent and a radial extent of the tissue sample may be obtained.

In some embodiments, the method may further comprise providing one or more imaging markers, in particular one or more cell-type specific imaging markers, in the carrier fluid for labelling the single cells and/or cell aggregates. Each of the imaging markers may for example be configured to selectively bind to one or more types of cells and may e.g. comprise a cell-type specific antibody. The one or more imaging markers may be configured to facilitate detection and/or identification of the respective cells. For example, an imaging marker maybe provided that comprises a marker object for phase contrast microscopy, wherein the marker object may e.g. have a predetermined size and/or optical thickness and may for example be a metal cluster. Additionally or alternatively, an imaging marker may be provided that comprises a marker object for fluorescence microscopy, wherein the marker object may e.g. have a characteristic absorption and/or emission spectrum and may for example be a fluorophore.

In some embodiments, the method may further comprise performing one or more spectroscopic measurements on the single cells and/or cell aggregates. The method may in particular comprise performing molecular spectroscopy on the single cells and/or cell aggregates, e.g. in the measurement volume. The molecular spectroscopy may comprise recording one or more optical spectra of the single cells and/or cell aggregates, e.g. an absorption spectrum and/or an emission spectrum in one or more wavelength ranges. The method may further comprise determining features such as absorption and/or emission lines in the one or more optical spectra, e.g. to detect the presence, absence, and/or concentration of specific molecules. Performing the molecular spectroscopy may for example comprise performing Raman spectroscopy and/or multiphoton spectroscopy on the single cells and/or cell aggregates.

In a preferred embodiment, the method further comprises determining a cell type of one or more cells from a phase shift image, in particular from the first phase shift image. This may for example comprise determining one or more morphological parameters of the cells and determining the cell type based on the one or more morphological parameters, e.g. based on thresholds and/or ranges for the morphological parameters and/or using one or more neural-network-based classifiers for the morphological parameters. Additionally or alternatively, the cell type of the one or more cells may be determined using computer vision techniques, e.g. one or more neural-network-based classifiers for the phase shift image. In some embodiments, the cell type of the one or more cells may be determined using a cell-type specific imaging marker, e.g. by determining whether or not the one or more cells are labelled with the imaging marker.

In some examples, the method may comprise hydrodynamic and/or viscoelastic focusing of the single cells and/or cell aggregates in the measurement volume. This may for example allow for a precise positioning of the single cells and/or cell aggregates at a reference point relative to the microscope, e.g. in or adjacent to a focal plane of the microscope and/or at or adjacent to a focus point of the microscope. Hydrodynamic focusing may comprise generating one or more sheath flows, in particular laminar sheath flows, surrounding the carrier fluid flow in the measurement volume, e.g. to confine the carrier fluid flow along one or more direction to a small volume, for example at the center of the measurement volume or in the vicinity of a sidewall of the measurement volume. Viscoelastic focusing may for example be achieved by providing a viscoelastic carrier fluid, e.g. a carrier fluid containing polymers such as polyethylene glycol or hyaluronic acid. A viscoelastic fluid may exert hydrodynamic forces on the single cells and/or cell aggregates, thereby inducing a controlled motion perpendicular to a direction of flow. Preferably, the single cells and/or cell aggregates are focused such that the single cells and/or cell aggregates propagate in the same plane or along the same path, e.g. such that a center of the single cells and/or cell aggregates is displaced by less than 10 µm, in some examples less than 5 µm, in one example less than 2 µm from the respective plane or path.

The tissue sample may for example be a biopsy sample, in particular a needle biopsy sample. The biopsy sample may for example have been directly extracted from a patient, e.g. by incisional biopsy such as endoscopic ultrasound-guided fine-needle aspiration (EUS-FNA) biopsy, or may be extracted from tissue that has previously been removed from a patient's body, e.g. by excisional biopsy or another surgical procedure. The tissue sample may for example be a sample of known or suspected cancer tissue, in particular pancreatic cancer tissue.

The present invention further provides a microfluidic system for analyzing a tissue sample comprising a plurality of biological cells forming a continuous tissue material using a method according to any one of the embodiments described herein. The microfluidic system comprises a sample volume that is configured to receive the tissue sample through an insertion opening and an input port that is in fluid communication with the sample volume and configured to receive a carrier fluid. The microfluidic system further comprises a measurement volume that is in fluid communication with the sample volume via a microfluidic transport channel and a detection window for taking phase shift images of cells in the measurement volume using a quantitative phase-contrast microscope, in particular a digital holographic microscope.

The microfluidic system may for example be or comprise a microfluidic chip with a substrate in which the sample volume, the input port, the transport channel, the measurement volume and/or the detection window are formed. The substrate may comprise one or more layers, each of which may e.g. comprise or consist of glass, plastic, metal, or a combination thereof. The substrate may in particular comprise one or more layers comprising or consisting of a transparent thermoplastic such as polymethyl methacrylate (PMMA). In some examples, the microfluidic system may comprise multiple separate elements, e.g. a sample chamber enclosing the sample volume and a measurement chamber enclosing the measurement volume, wherein the transport channel may e.g. be formed by a tube connecting the sample chamber to the measurement chamber.

The sample volume may be enclosed by a plurality of sidewalls and may for example have a cuboid or cylindrical shape. The sample volume may e.g. have a size between 0.5 mm and 5 mm in every direction and/or a volume between 0.2 mm³ and 100 mm². The insertion opening may be an opening in one of the sidewalls, wherein the opening may extend over a part of the respective sidewall or over the entire sidewall. Preferably, the microfluidic system comprises a cover member that is configured to be placed on or in the insertion opening, e.g. to close or seal off the sample volume.

The input port may for example be arranged in a sidewall of the sample volume and may comprise an opening to the sample volume. In other examples, the input port may be connected to the sample volume via an input channel, e.g. a microfluidic channel in the microfluidic chip having an opening to the sample volume. The input port may be configured to receive a fluid connector, e.g. to connect the input port to a fluid supply system via a tube. In some examples, the input port may also form the insertion opening or may be arranged in a cover member for the insertion opening.

The measurement volume may also be enclosed by a plurality of sidewalls and may for example have a cuboid or cylindrical shape. The measurement volume is connected to the sample volume through the transport channel, wherein a cross-sectional area of the transport channel is sufficiently large such that single cells and/or cell aggregates can pass through the transport channel while preventing the tissue sample from entering the transport channel. The cross-sectional area of the transport channel may for example be between 500 µm² and 1 mm². In some examples, the measurement volume and the transport channel may be segments of the same channel, e.g. a channel connecting the sample volume to an output port or a reservoir of the microfluidic system, i.e. the measurement volume may have the same cross-sectional area as the transport channel. In other examples, the measurement volume may have a different cross-sectional area than the transport channel, e.g. a larger cross-sectional area.

The detection window may for example be a transparent sidewall of the measurement volume or a part thereof or may be a transparent window arranged in a sidewall of the measurement volume. Preferably, the detection window is optimized for phase shift measurements. For example, a transmitted wavefront error of the detection window may be less than λ/2, preferably less than λ/4, in one example less than λ/8. The detection window may for example comprise or consist of a transparent thermoplastic, borosilicate glass, and/or fused silica. The microfluidic system may further comprise an illumination window for illuminating the cells in the measurement volume, wherein the illumination window may e.g. be arranged on an opposite side of the measurement volume as the detection window. The illumination window may for example be a transparent sidewall of the measurement volume facing the detection window or may be a transparent window arranged in a sidewall facing the detection window. Preferably, the illumination window is parallel to the detection window and also optimized for phase shift measurements.

In a preferred embodiment, the microfluidic system comprises a movable element that is configured to be moved within the sample volume for moving the tissue sample in the sample volume. The movable element may for example be configured to come in contact with the tissue sample in order to push or pull the tissue sample along the sample volume. The movable element may be configured to slide along one or more sidewalls of the sample volume, in one example along a guiding rail arranged on the respective sidewall. In a preferred embodiment, the movable element is a piston comprising a cover member that is configured to seal off the insertion opening and to slide along the sample volume for moving the tissue sample along the sample volume. The cover member may for example be a plate with a shape corresponding to a cross-section of the sample volume, wherein the plate may comprise a sealing element along its edge in some examples. In another example, the movable element may be arranged in a sidewall of the sample volume or in a cover member for the insertion opening and may be configured to be extended from the sidewall and the cover member, respectively. The movable element may for example be a movable rod arranged in an opening in the sidewall or the cover member. The movable element may be configured to be mechanically coupled to an actuator such as an electric motor, a piezo actuator, or a hydraulic pressure source. The movable element may e.g. be brought in contact with an element such as a rod that is actuated by the electric motor or the hydraulic pressure source.

As mentioned above, the microfluidic system may comprise an input channel connecting the input port with the sample volume. Preferably, openings of the input and transport channels are arranged on opposing sidewalls of the sample volume and aligned with each other along a direction of flow of the input channel, e.g. such that fluid flowing from the input channel to the transport channel flows along a straight path or a substantially straight path through the sample volume. This may for example facilitate generating a flow of the carrier fluid through the sample volume that is confined to a portion of the sample volume, e.g. the portion of the sample volume extending between the openings of the input and transport channels. In one example, the input channel and thus a direction of flow of the input channel at its opening is perpendicular to the sidewall of the sample volume on which the opening of the input channel is arranged. The opening of the transport channel may be arranged directly opposite the opening of the input channel on the opposing sidewall, wherein the transport channel may e.g. also extend perpendicular to the respective sidewall. In another example, the direction of flow of the input channel may extend at an angle relative to the respective sidewall and the opening of the transport channel on the opposing sidewall may be displaced relative to the opening of the input channel.

In a preferred embodiment, the microfluidic system comprises one or more sheath flow channels that are in fluid communication with the measurement volume. The one or more sheath flow channels may be configured to generate one or more sheath flows for hydrodynamically focusing the carrier fluid in the measurement volume. Each of the sheath flow channels may e.g. terminate at a respective opening in a sidewall of the measurement volume or of the transport channel. A direction of flow in the sheath flow channels may be at an angle relative to a direction of flow of the transport channel, for example to generate sheath flows surrounding the carrier fluid flow in the measurement volume. The sheath flows may confine the carrier fluid flow in one or two directions, e.g. to a narrow sheet, which may for example have a thickness between 5 µm and 20 µm, or a narrow tube or filament, which may for example have a thickness between 5 µm and 20 µm in two orthogonal directions.

In some embodiments, the microfluidic system may comprise a cell sorter that is configured to sort single cells. The cell sorter may for example be arranged along the transport channel or in the measurement volume. Preferably, the cell sorter is arranged along an output channel that is in fluid communication with the measurement volume and e.g. connects the measurement volume to one or more output ports and/or to one or more reservoirs of the microfluidic system. The cell sorter may be configured to selectively direct the single cells to one of a plurality of channels or outlets. The cell sorter may for example comprise an active cell sorter that is configured to sort the cells based on a control signal, which may e.g. be provided by an external controller, and/or a passive cell sorter that is configured to sort the cells based on electric, magnetic, and/or hydrodynamic properties of the cells. The cell sorter may comprise one or more electrodes for generating an electric field for sorting the cells and/or one or more inductive elements for generating a magnetic field for sorting the cells. Accordingly, the control signal may for example be an electrical control signal such as a voltage or a current. Additionally or alternatively, the cell sorter may comprise one or more optical elements and/or light sources for generating an optical potential for sorting the cells and the control signal may for example be a light pulse. In some examples, the cell sorter may comprise one or more microfluidic elements such as valves and/or channels, e.g. a channel that extends at an angle and in particular perpendicular to the output channel for generating a deflecting flow or one or more curved channels for hydrodynamic cell sorting.

The present invention further provides a device for analyzing a tissue sample comprising a plurality of biological cells forming a continuous tissue material using a method according to any one of the embodiments described herein. The device comprises a mount that is configured to receive a microfluidic system, wherein the microfluidic system comprises a sample volume configured to receive the tissue sample and a measurement volume in fluid communication with the sample volume. The device further comprises a quantitative phase-contrast microscope configured to take phase shift images of cells in the measurement volume and a controller. The controller is configured to control means for dissolving at least a part of the tissue sample into single cells and/or cell aggregates in a carrier fluid in the sample volume and for generating a flow of the carrier fluid from the sample volume to the measurement volume.

The mount may be configured to hold the microfluidic system, e.g. at a fixed reference position relative to the microscope. Preferably, the mount is configured to position the microfluidic system relative to the microscope, e.g. to move the microfluidic system along one or more directions and/or to tilt the microfluidic system around one or more axes. In some examples, the mount may further comprise one or more fluid connectors for interfacing ports of the microfluidic system, e.g. an input port and an output port of the microfluidic system. The microfluidic system may for example be a microfluidic system according to one of the embodiments of the invention described herein.

The quantitative phase-contrast microscope is configured to take phase shift images, i.e. images that encode a phase shift of light at one or more wavelengths as a function of position. Preferably, the quantitative phase-contrast microscope is configured to determine an absolute value of the phase shift. In other examples, the microscope may only be configured to determine the phase shift modulo 2π. The microscope may for example be configured to obtain the phase shift through interference of light, e.g. between a probe or imaging beam and a reference beam. The microscope may be configured to take one or more interference images and to reconstruct a phase shift image from the one or interference images. In some examples, the microscope may also be configured to take amplitude or intensity images, wherein an intensity image may encode an intensity of light as a function of position, e.g. an intensity of light reflected off or transmitted through the sample as a function of the position in the sample. In a preferred embodiment, the microscope is a digital holographic microscope, e.g. as detailed below. In other examples, the microscope may be a ptychographic microscope.

The controller maybe implemented in hardware, software, or a combination thereof. The controller may for example comprise a processing device and a memory storing instructions for execution by the processing device to provide the functionality described herein. The controller may for example be configured to generate control signals, e.g. digital and/or analog control signals, to control the means for dissolving the tissue sample and for generating the carrier fluid flow. In some examples, the controller may be configured to execute a method of analyzing a tissue sample according to one of the embodiments described herein at least in part.

The means for dissolving the tissue sample at least in part may for example comprise one or more microfluidic elements such as a valve and/or a pump, which may for example be configured to supply a dissolving fluid to the sample volume and/or to admix the dissolving fluid to the carrier fluid, wherein the dissolving fluid may for example comprise one or more enzymes for an enzymatic digestion of the tissue sample, e.g. as detailed below. The controller may for example be configured to generate respective control signals for opening and closing the valve and/or for switching the pump on and off, e.g. to initiate or stop dissolving the tissue sample. Additionally or alternatively, the means for dissolving the tissue sample at least in part may for example comprise an ultrasound source that is configured to apply ultrasound to the sample volume. The controller may for example be configured to generate respective control signals for switching the ultrasound source on and off, e.g. to initiate or stop dissolving the tissue sample.

The means for generating the carrier fluid flow may for example also comprise one or more microfluidic elements such as a valve and/or a pump, which in some examples may also serve as means for dissolving the tissue sample, e.g. if the carrier fluid contains the dissolving fluid or a dissolving substance. The controller may for example be configured to generate respective control signals for opening and closing the valve and/or for switching the pump on and off, e.g. to start or stop the carrier fluid flow.

In some embodiments, the device comprises an ultrasound source that is configured to apply ultrasound to the sample volume of the microfluidic system. The controller may be configured to control the ultrasound source, e.g. by providing corresponding control signals, to dissolve at least a part of the tissue sample by applying ultrasound to the tissue sample in the sample volume. The ultrasound source may for example comprise a sonotrode that is configured to be brought in contact with or mechanically coupled to the mount and/or the microfluidic system, in particular a sidewall of the sample volume or a cover member for an insertion opening of the sample volume. Additionally or alternatively, the ultrasound source may e.g. comprise an ultrasonic transmitter that is integrated into the mount. The ultrasound source may for example be configured to generate vibrations with a frequency between 20 kHz and 40 kHz.

In a preferred embodiment, the device comprises a microfluidics unit that is configured to supply one or more fluids to the microfluidic system. The microfluidics unit may comprise one or more reservoirs for storing the fluids and/or one or more pumps and/or one or more valves for supplying the fluids to the microfluidic system. The microfluidics unit may comprise one or more output ports that are configured to be connected to respective input ports of the mount and/or of the microfluidic system. The controller may be configured to control the microfluidics unit to supply the fluids to the microfluidic system.

The microfluidics unit may in particular be configured to supply a dissolving fluid to the sample volume, wherein the dissolving fluid comprises enzymes for an enzymatic digestion of the tissue sample, e.g. as detailed above for the method according to the invention. The microfluidics unit may comprise a reservoir for storing the dissolving fluid and a pump and/or one or more valves for supplying the dissolving fluid to the microfluidic system. The controller may be configured to control the microfluidics unit, e.g. by providing a corresponding control signal, to dissolve at least a part of the tissue sample by supplying the dissolving fluid to the sample volume, The controller may for example be configured to control the microfluidics unit to supply a predetermined amount of the dissolving fluid to the sample volume and/or to generate a flow of the dissolving fluid through the sample volume for a predetermined amount of time.

Preferably, the microfluidics unit is also configured to generate the flow of the carrier fluid from the sample volume to the measurement volume, e.g. in response to a corresponding control signal provided by the controller. The microfluidics unit may for example comprise a reservoir for storing the carrier fluid and a pump and/or one or more valves for supplying the carrier fluid to the microfluidic system. The controller may be configured to control the microfluidics unit to adjust a flow rate, a flow velocity, and/or a flow duration of the carrier fluid. In some examples, the carrier fluid may correspond to the dissolving fluid or may contain the dissolving fluid. The controller may for example be configured to control the microfluidics unit to admix the dissolving fluid or a dissolving substance to the carrier fluid.

In some examples, the microfluidics unit is further configured to supply a sheath fluid to the microfluidic system for generating one or more sheath flows in the measurement volume. The microfluidics unit may for example comprise a reservoir for storing the sheath fluid and a pump and/or one or more valves for supplying the sheath fluid to the microfluidic system. In some examples, the sheath fluid may have the same composition as the carrier fluid and may for example be stored in the same reservoir. The controller may be configured to control the microfluidics unit to hydrodynamically focus the carrier fluid in the measurement volume by supplying the sheath fluid to the microfluidic system, e.g. to one or more sheath flow channels of the microfluidic system. The controller may be configured to control the microfluidics unit to adjust a flow rate, a flow velocity, and/or a flow duration of the sheath fluid.

In a preferred embodiment, the device further comprises an actuator that is configured to move a movable element within the sample volume, wherein the controller is configured to control the actuator to move the movable element within the sample volume for moving the tissue sample within the sample volume. The actuator may for example comprise an electric motor, a piezo actuator, and/or a hydraulic pressure source and may be mechanically coupled to the movable element and/or may be configured to be mechanically coupled to the movable element. The movable element may be comprised in the device or may be part of the microfluidic system, e.g. as described above. The movable element may for example be a piston with a cover member that is configured to be inserted into the sample volume. The cover member may for example be configured to seal off an opening of the sample volume, e.g. an insertion opening, and to slide along the sample volume, e.g. while being in contact with one or more sidewalls of the sample volume. The controller may be configured to control the actuator to move the piston along the sample volume for moving the tissue sample along the sample volume, e.g. by advancing the piston from the insertion opening into the sample volume.

In some examples, the controller is configured to determine a cell type of one or more cells from the phase shift images, e.g. as described above for the method according to the invention. The controller may in particular be configured to determine one or more morphological parameters of the cells and to determine the cell type based on the one or more morphological parameters. Additionally or alternatively, the controller may be configured to determine the cell type using computer vision techniques for analyzing phase shift images.

In some embodiments, the microfluidic system comprises a cell sorter that is configured to sort single cells based on a control signal, e.g. as described above. The controller may be configured to control the cell sorter to sort the cells, for example by generating corresponding control signals. The controller may e.g. be configured to apply a voltage to one or more electrodes of the cell sorter and/or to apply a current to one or more inductive elements of the cell sorter, e.g. to selectively direct the cells to one of a plurality of channels or outlets. Additionally or alternatively, the controller may be configured to generate an optical potential for the cells in the cell sorter by controlling one or more light sources and/or to generate a deflecting flow in the cell sorter, e.g. in a direction perpendicular to the carrier fluid flow.

Preferably, the controller is configured to control the cell sorter to sort the one or more cells for which the cell type is determined from the phase shift images based on the determined cell type of the one or more cells. The controller may for example be configured to control the cell sorter to separate cells of one or more predetermined types from cells of other types. In one example, the controller is configured to control the cell sorter to direct cells of a first set of cell types, e.g. cells of a first type, to a first channel and to direct cells that are not of a type in the first set of cell types to a second channel. In another example, the controller is configured to control the cell sorter to direct cells of the first set of cell types to the first channel, to direct cells of a second set of cell types, e.g. cells of a second type, to the second channel and to direct cells that are neither of a type in the first set of cell types nor of a type in the second set of cell types to a third channel.

In a preferred embodiment, the quantitative phase-contrast microscope is a digital holographic microscope, which is configured to take phase shift images as well as amplitude or intensity images of a sample. The digital holographic microscope may for example be configured to interfere an image of the sample, e.g. an imaging beam of light transmitted through the sample, with a reference beam, wherein the reference beam may pass through the sample or may not pass through the sample. The digital holographic microscope may be configured to extract or reconstruct the phase shift and intensity images from one or more interference images, e.g. by reconstructing a wave front of light transmitted through or reflected off the sample. The digital holographic microscope may be an on-axis digital holographic microscope, in which the imaging beam and the reference beam propagate along the same axis when interfering. Preferably, the digital holographic microscope is an off-axis digital holographic microscope, in which the imaging beam and the reference beam interfere under an angle and which may be configured to extract a phase shift image from a single interference image of the sample. Such digital holographic microscopes are for example known from EP 1524 491 A1 and EP 2 357 539 A1.

In some examples, the device may comprise one or more microfluidic systems according to one of the embodiments of the invention described here in.

The method according to the invention, the microfluidic system according to the invention, and the device according to the invention may also be adapted for use with other detection or measurement techniques, either in addition or as an alternative to quantitative phase-contrast microscopy. For example, a different microscopy technique such as bright-field microscopy, fluorescence microscopy, and/or super-resolution microscopy maybe used. Additionally or alternatively, any other type of measurement such as another optical measurement or an electrical measurement may be performed on the single cells and/or the cell aggregates in the measurement volume, i.e. a measurement may be performed instead of or in addition to taking a phase shift image in any of the embodiments disclosed herein.

Accordingly, the invention also provides a method of analyzing a tissue sample using a microfluidic system, the method comprising: (1) providing the tissue sample in a sample volume of the microfluidic system, wherein the tissue sample comprises a plurality of biological cells forming a continuous tissue material; (2) dissolving at least a part of the tissue sample into single cells and/or cell aggregates in a carrier fluid in the sample volume; (3) generating a flow of the carrier fluid from the sample volume to a measurement volume of the microfluidic system; and (4) performing a first measurement on the single cells and/or cell aggregates in the measurement volume. The above numbering is for clarity only and does not imply a certain order of execution of the method.

In some embodiments, the tissue sample is analyzed using a microscope, for example a bright-field microscope or a fluorescence microscope. Accordingly, performing the first measurement may comprise or correspond to taking a first microscopic image of the single cells and/or cell aggregates in the measurement volume with the microscope. In some examples, the method may comprise taking multiple microscopic images, e.g. as described above for the phase shift images.

The invention further provides a microfluidic system for analyzing a tissue sample comprising a plurality of biological cells forming a continuous tissue material using a method according to the aforementioned embodiment, the microfluidic system comprising: (1) a sample volume configured to receive the tissue sample through an insertion opening; (2) an input port that is in fluid communication with the sample volume and configured to receive a carrier fluid; (3) a measurement volume in fluid communication with the sample volume via a microfluidic transport channel; and (4) a detection window for taking microscopic images of cells in the measurement volume.

The invention also provides a device for analyzing a tissue sample comprising a plurality of biological cells forming a continuous tissue material using a method according to the aforementioned embodiment, the device comprising: (1) a mount configured to receive a microfluidic system comprising a sample volume configured to receive the tissue sample and a measurement volume in fluid communication with the sample volume; and (2) a controller configured to control means for dissolving at least a part of the tissue sample into single cells and/or cell aggregates in a carrier fluid in the sample volume and for generating a flow of the carrier fluid from the sample volume to the measurement volume. In other words, the device according to the invention may not comprise the quantitative phase-contrast microscope in some embodiments but may for example comprise a different measurement device instead, e.g. a different type of microscope and/or an electrical measurement device. In some embodiments, the device may not comprise any measurement device, but may e.g. be configured for use with a measurement device such as a microscope or an electrical measurement device.

### LIST OF FIGURES

In the following, a detailed description of the invention and exemplary embodiments thereof is given with reference to the figures. The figures show schematic illustrations of
Fig. 1: a microfluidic system for analyzing a tissue sample according to an exemplary embodiment of the invention;
Fig. 2: a microfluidic system comprising a movable element and a cell sorter in accordance with an exemplary embodiment of the invention;
Fig. 3: a device for analyzing a tissue sample according to an exemplary embodiment of the invention;
Fig. 4: a quantitative phase-contrast microscope of the device of Fig. 3 in accordance with an exemplary embodiment of the invention; and
Fig. 5: a flow chart of a method of analyzing a tissue sample using a quantitative phase-contrast microscope according to an exemplary embodiment of the invention.

### DESCRIPTION OF THE PREFERRED EMBODIMENTS

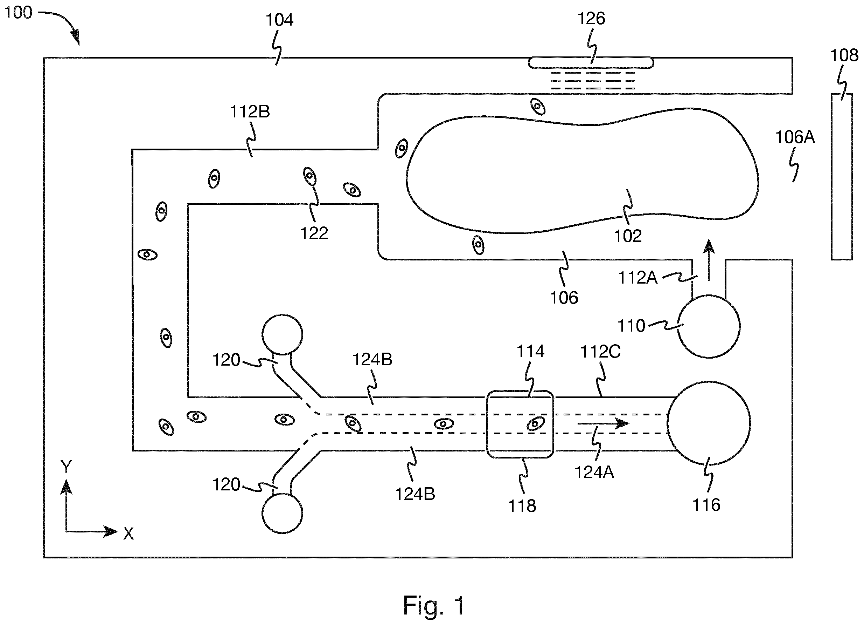

Fig. 1 shows a schematic illustration of a microfluidic system 100 for analyzing a tissue sample 102 according to an exemplary embodiment of the invention in top view. The tissue sample 102 comprises a plurality of biological cells, which form a continuous tissue material, in which the cells are linked with each other by an extracellular matrix. The tissue sample 102 may for example be a needle biopsy sample that has previously been extracted from a patient.

The microfluidic system 100 comprises a microfluidic chip with a substrate 104, which may for example comprise or consist of one or more layers of a transparent thermoplastic such as polymethyl methacrylate (PMMA). The substrate 104 may for example comprise one or more structured layers in which some or all of structures described in the following are formed as well as a pair of cover layers sandwiching the structured layers to seal off the structures therein.

The substrate 104 encloses a sample volume 106, which is configured to receive the tissue sample 102 through an insertion opening 106A. The insertion opening 106A may for example be configured to receive a tip of a biopsy needle containing the tissue sample 102 in order to release the tissue sample 102 from the biopsy needle in the sample volume 106. In the example of Fig. 1, the insertion opening 106A is a lateral insertion opening 106A arranged on a side face of the substrate 104. In other examples, the insertion opening 106A may for example be arranged on a top surface of the substrate 104, e.g. the surface perpendicular to the direction of view in Fig. 1. The sample volume 106 may for example have a volume between 1 mm³ and 50 mm³. The sample volume 106 may e.g. have a cuboid or cylindrical shape with a length between 2 mm and 5 mm along a longitudinal axis of the sample volume 106, wherein the longitudinal axis may for example be aligned with the X direction of Fig. 1. A width and a height or a diameter of the sample volume 106 perpendicular to the longitudinal axis may for example be between 0.5 mm and 2 mm. The microfluidic system 100 further comprises a cover member 108, which is configured to be removably placed on the insertion opening 106A of the sample volume 106, e.g. to seal off the sample volume 106 from the environment of the microfluidic system 100 after placing the tissue sample 102 therein.

The microfluidic system 100 comprises an input port 110, e.g. on the top surface of the substrate as in Fig. 1, that is in fluid communication with the sample volume 106 via an input channel 112A. The input port 110 is configured to receive a fluid such as a carrier fluid, which may be supplied to the sample volume 106 via the input channel 112A. The input port 110 is for example configured to receive a fluid connector, e.g. a fluid connector attached to a tube, to connect the microfluidic system 100 to a fluid source such as a microfluidics unit.

The microfluidic system 100 further comprises a measurement volume 114 that is formed in the substrate 104 and in fluid communication with the sample volume 106 via a microfluidic transport channel 112B in the substrate 104. A cross-sectional area of the transport channel 112B is considerably smaller than a cross-sectional area of the sample volume 106 such that the tissue sample 102 cannot enter the transport channel 112B. The transport channel 112B may for example have a cross-sectional area perpendicular to a direction of flow in the transport channel between 500 µm² and 1 mm², in one example between 0.001 mm² and 0.05 mm². In the example of Fig. 1, the measurement volume 114 and the transport channel 112B are adjacent segments of the same channel, i.e. the measurement volume 114 has the same cross-sectional area as the transport channel 112B. In other examples, the measurement volume 114 may have a different cross-sectional area than the transport channel 112B, e.g. a larger cross-sectional area than the transport channel 112B.

The measurement volume 114 is in fluid communication with an output port 116 of the microfluidic system 100 via an output channel 112C, which may also be a segment of the same channel as the transport channel 112B and the measurement volume 114 as in the example of Fig. 1. The output port 116 is arranged on the top surface of the substrate 104 and is configured to receive a fluid connector, e.g. to extract fluid from the microfluidic system 100. In other examples, the microfluidic system 100 may additionally or alternatively comprise a reservoir (not shown) that is connected to the measurement volume 114 and configured to receive fluid from the measurement volume 114.

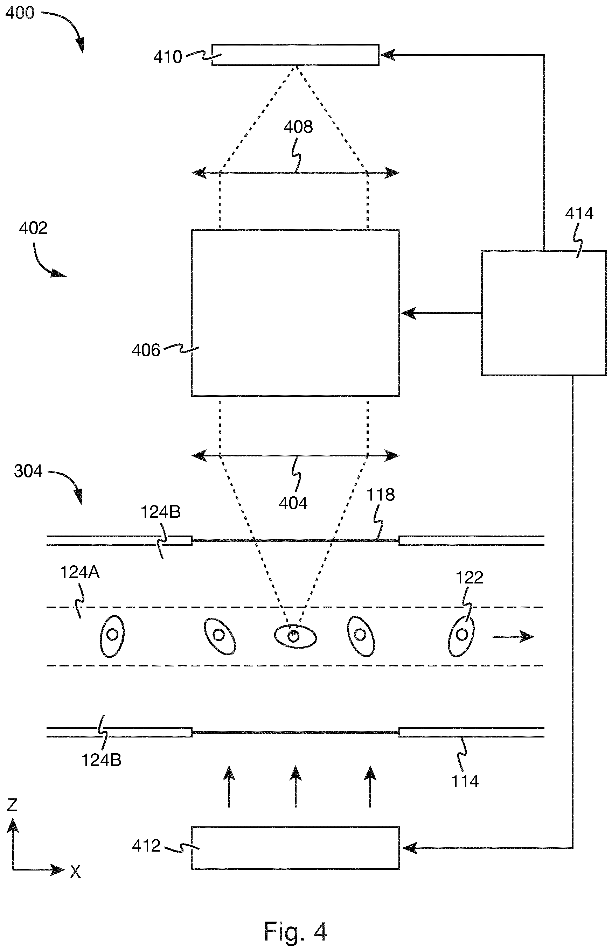

In the top surface of the substrate 104, a detection window 118 is formed above the measurement volume 114. The detection window 118 is suitable for taking phase shift images through the detection window 118 using a quantitative phase-contrast microscope. For example, a transmitted wavefront error of the detection window may be less than λ/2, preferably less than λ/4, in one example less than λ/8. The detection window 118 may for example be a portion of a cover layer of the substrate 104 or may be arranged in or on the cover layer. The detection window 118 and/or the cover layer may for example comprise or consist of a transparent thermoplastic, borosilicate glass, and/or fused silica. The detection window 118 may cover the entire measurement volume 114 or a part thereof and may for example have a size between 2 mm x 2 mm and 25 mm x 25 mm. In some examples, the microfluidic system 100 may also comprise an illumination window (not shown) that is arranged on a side of the measurement volume 114 opposite to the detection window 118, e.g. in or on a bottom surface of the substrate 114, for example as detailed below with reference to Fig. 4. The illumination window may be similar or identical to the detection window 118.

The microfluidic system 100 further comprises a plurality of sheath flow channels 120 that are in fluid communication with the measurement volume 114. Each of the sheath flow channels 120 connects a respective port with a portion of the transport channel 112B in front of the measurement volume 114. Each of the sheath flow channels 120 may terminate at an outlet arranged in a side wall of the transport channel 112B, wherein each sheath flow channel 120 and thus a direction of flow in the respective sheath flow channel 120 extends at an angle relative to the transport channel 112B and thus a direction of flow in the transport channel 112B. Thereby, a plurality of laminar sheath flows 124B may be generated in the measurement volume 114 for hydrodynamic focusing as detailed below.

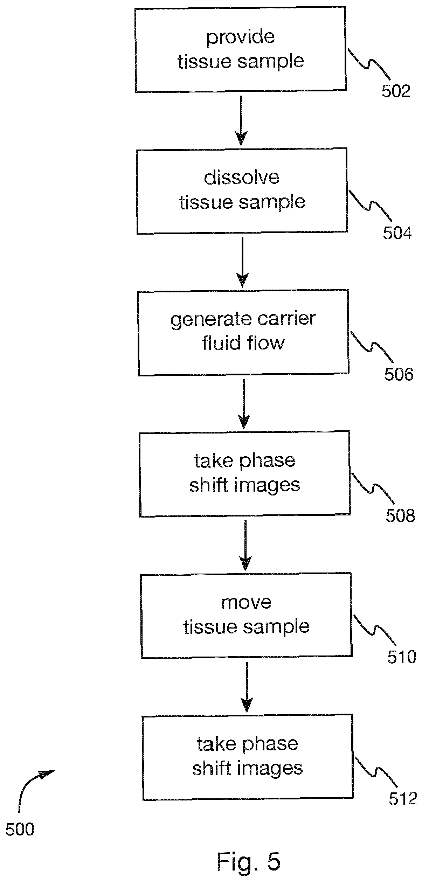

The microfluidic system 100 may for example be used for analyzing the tissue sample 102 with a quantitative phase-contrast microscope using the method 500 described below with reference to Fig. 5. In short, the tissue sample 102 in the sample volume 106 may be embedded in a carrier fluid supplied to the sample volume 106 and may be at least partially dissolved into single cells 122 and/or cell aggregates (not shown) comprising a small number of cells adhering to each other, e.g. by enzymes contained in the carrier fluid or in a dissolving fluid or substance that is added to the carrier fluid. A flow 124A of the carrier fluid may be generated from the sample volume 106 to the measurement volume 114, for example by supplying the carrier fluid via the input port 110 and extracting the carrier fluid via the output port 116. The carrier fluid flow 124A may transport the single cells 122 and/or cell aggregates separated from the tissue sample 102 from the sample volume 106 to the measurement volume 114. A sheath fluid may be provided to the sheath flow channels 120 to generate sheath flows 124B for hydrodynamically focusing the carrier fluid flow 124A. The sheath flows 124B surround the carrier fluid flow 124A and confine the carrier fluid flow 124A in one or two directions perpendicular to a flow direction of the carrier fluid flow 124A, e.g. to a plane or a filament extending through a focus point of the microscope. The carrier fluid flow 124A may for example be focused to a cross-sectional area between 20 µm² and 500 µm², e.g. at or adjacent to a center of the measurement volume 114 or adjacent to the detection window 118.

In the example of Fig. 1, the microfluidic system 100 further comprises an ultrasound emitter 126 that is configured to apply ultrasound to the sample volume 106 and in particular the tissue sample 102 arranged therein. The ultrasound emitter 126 may for example be or comprise a sidewall of the sample volume 106 or a part thereof that is configured to transmit ultrasound applied to the microfluidic system 100, e.g. to an outer surface of the substrate 104, to the interior of the sample volume 106. A shape, a thickness, and/or a material of the ultrasound emitter 126 may be adapted to increase the transmission efficiency into the sample volume 106. For example, a resonance frequency of the ultrasound emitter 126 may be adapted to a frequency of the ultrasound applied to the microfluidic system 100 and may for example be between 20 kHz and 40 kHz. In other examples, the ultrasound emitter 126 may additionally or alternatively comprise an ultrasonic transmitter that is configured to convert an electrical signal applied to the ultrasound emitter 126 to ultrasound. The ultrasonic transmitter may for example comprise one or more piezo elements and/or one or more capacitive elements that are configured to convert an alternating current (AC) electrical signal to ultrasonic waves.

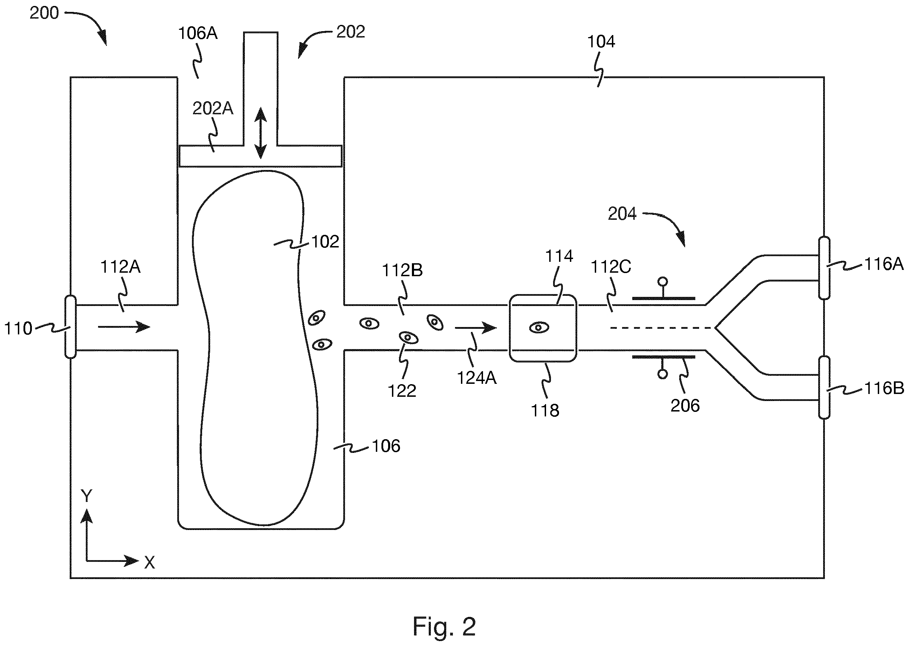

Fig. 2 depicts a schematic illustration of a microfluidic system 200 for analyzing a tissue sample 102 according to another exemplary embodiment of the invention in top view. The microfluidic system 200 is similar to the microfluidic system 100 of Fig. 1, wherein corresponding elements are denoted using the same reference signs as in Fig. 1. In particular, the microfluidic system 200 also comprises a substrate 104, in which a sample volume 106 configured to receive the tissue sample 102 and a measurement volume 114 are formed. The sample volume 106 is connected with an input port 110 on a sideface of the substrate 104 via an input channel 112A and with the measurement volume 114 via a transport channel 112B.

The input channel 112A and the transport channel 112B of the microfluidic system 200 are aligned with each other such that an opening of the transport channel 112B is arranged on a sidewall of the sample volume 106 opposite to an opening of the input channel 112A and directly facing the opening of the input channel 112A. A flow path of fluid flowing along the input channel 112A extends across the sample volume 106 into the opening of the transport channel 112B, thereby facilitating the generation of a carrier fluid flow 124A that is confined to a central portion of the sample volume 106 and thus e.g. only flows around a portion of the tissue sample 102. The flow path of the fluid flowing along the input channel 112A may for example extend perpendicular to the sidewalls of the sample volume 106 on which the openings of the input and transfer channels 112A, 112B are arranged as illustrated in Fig. 2.

The microfluidic system 200 further comprises a movable element 202 that is configured to be moved within the sample volume 106 for moving the tissue sample 102 in the sample volume 106 as illustrated by the double-headed arrow in Fig. 2. In this way, different portions of the tissue sample 102 may be exposed to the carrier fluid flow 124A and/or positioned adjacent to the outlet of the sample volume 106 to the transport channel 112B. In the example of Fig. 2, the movable element 202 is a piston comprising a cover member 202A that is configured to seal off the insertion opening 106A of the sample volume 106. The cover member 202A is configured to slide along the sample volume 106 for moving the tissue sample 102 along the sample volume 106. The cover member 202A may for example comprise or consist of plastic, in particular a thermoplastic, and may comprise a sealing member (not shown) along its edge that is configured to come in contact with sidewalls of the sample volume 106 to provide a tight seal while moving the cover member 202A along the sample volume 106. The piston 202 further comprises a rod or shaft, which is attached to a backside of the cover member 202A and configured to be mechanically coupled to an actuator (not shown) such as an electric motor or a piezo element for moving the piston 202 along the sample volume 106.

The microfluidic system 200 also comprises a cell sorter 204 that is arranged along an output channel 112C connecting the measurement volume 114 to a pair of output ports 116A, 116B on a side face of the substrate 104. The cell sorter 204 comprises a fork or junction at which the output channel 112C splits into a pair of channels, each of which is connected to a respective one of the output ports 116A, 116B. Between the junction and the measurement volume 114, a pair of electrodes 206 is arranged within or on top of the substrate on opposite sides of the output channel 112C, e.g. on or adjacent to opposing sidewalls of the output channel 112C. Each of the electrodes 206 is electrically coupled to a respective electrical connector, which may for example be connected to a voltage source in order to apply a voltage to the electrodes 206. The voltage applied to the electrodes 206 creates an electrical field across the output channel 112C, which depending on the sign of the applied voltage may e.g. be used to deflect cells in the carrier fluid flow 124A in the output channel 112C by electrophoresis towards one of the channels splitting at the junction and thus towards the output ports 116A, 116B.

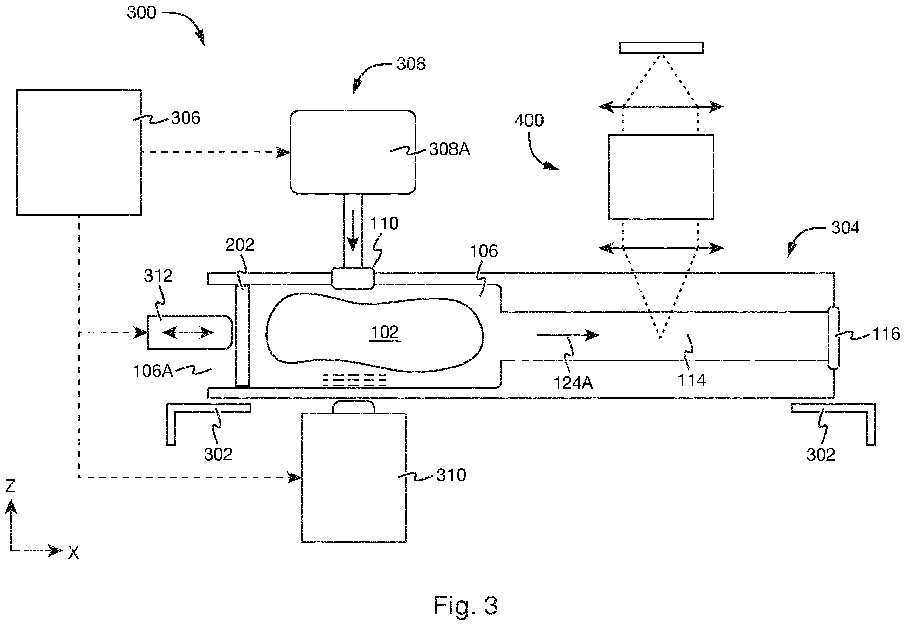

Fig. 3 schematically illustrates a device 300 for analyzing a tissue sample 102 according to an exemplary embodiment of the invention in side view. The device 300 comprises a quantitative phase-contrast microscope 400 configured to take phase shift images, which is shown in more detail in Fig. 4 and described below. The device 300 may for example be used for implementing a method of analyzing a tissue sample according to one of the embodiments described herein, for example the method 500 described below with reference to Fig. 5.

The device 300 comprises a mount 302 that is configured to receive a microfluidic system 304. The microfluidic system 304 comprises a sample volume 106 configured to receive the tissue sample 102 and a measurement volume 114 that is in fluid communication with the sample volume 106. The microfluidic system 304 may be similar to one of the microfluidic systems 100, 200 described above, wherein corresponding elements are denoted using the same reference signs as in Figs. 1 and 2. In particular, the microfluidic system 304 also comprises an input port 110, which is arranged on a top surface of the microfluidic system 304 and in fluid communication with the sample volume 106, and an output port 116, which is arranged on a sideface of the microfluidic system 304 and in fluid communication with the measurement volume 114. The mount 302 may further be configured to receive other microfluidic systems, in particular microfluidic systems according to one of the embodiments of the invention described herein such as the microfluidic system 100 and/or the microfluidic system 200.

The mount 302 is configured to hold the microfluidic system 304 in place, e.g. to prevent a motion of the microfluidic system 304 relative to a focus point of the microscope 400 at least along the Z axis of Fig. 3, preferably along all three axes. The mount 302 may for example comprise one or more fasteners (not shown) for fixing the microfluidic system 304 to the mount 302. Preferably, the mount 302 is configured to adjust a position and/or an orientation of the microfluidic system 304, for example by moving the microfluidic system 304 along the X, Y, and/or Z axis of Fig. 3 and/or by tilting the microfluidic system 304 around the X, Y, and/or Z axis, wherein the Y axis is aligned with the direction of view in Fig. 3.

The device 300 further comprises a controller 306 that is configured to control means for dissolving at least a part of the tissue sample 102 into single cells (not shown) and/or cell aggregates (not shown) in a carrier fluid in the sample volume 106 of the microfluidic system 304 and means for generating a flow 124A of the carrier fluid from the sample volume 106 to the measurement volume 114. The controller 306 may be implemented in hardware, software, or a combination thereof and may for example comprise a processing device and a memory storing instructions for execution by the processing device to provide the functionality described herein. The controller 306 may for example comprise a central processing unit (CPU), a graphics processing unit (GPU), a field programmable gate array (FPGA), an application-specific integrated circuit (ASIC), and/or a microcontroller. Preferably, the controller 306 is configured to execute the method 500 of analyzing a tissue sample at least in part, for example some or all of steps 504 to 512.

In the example of Fig. 3, the controller 306 is configured to control a microfluidics unit 308, which may be part of the device 300 or may be provided as an independent unit. The microfluidics unit 308 comprises a reservoir 308A that is configured to store a fluid such as a carrier fluid and/or a dissolving fluid and to be connected to the input port 110 of the microfluidic system 304. The microfluidics unit 308 may further comprise a pump (not shown) and/or one or more valves (not shown) for supplying the fluid stored in the reservoir 308A to the input port 110. The controller 306 may be configured to generate control signals for the pump and/or one or more actuators configured to open and close the valves in order to start and stop a flow of the fluid to the measurement volume 106, e.g. to generate a flow of the carrier fluid from the sample volume 106 to the measurement volume 114 and/or to supply the dissolving fluid containing one or more enzymes for the enzymatic digestion of the tissue sample 102.

In some embodiments, the microfluidics unit 308 may further be configured to supply a sheath fluid to the microfluidic system 304 for generating a sheath flow in the measurement volume, for example as described above with reference to Fig. 1. The microfluidics unit 308 may for example comprise an additional reservoir (not shown) for storing the sheath fluid and a pump (not shown) and/or one or more valves (not shown) for supplying the sheath fluid to respective ports of the microfluidic system 304. In other examples, the carrier fluid stored in the reservoir 308A may also be used as the sheath fluid, e.g. by connecting the reservoir 308A to the respective ports of the microfluidic system 304. The controller 306 may be configured to control the microfluidics unit 308 to hydrodynamically focus the carrier fluid in the measurement volume 114 by supplying the sheath fluid to the microfluidic system 304.

The controller 306 is further configured to control an ultrasound source 310, which may be part of the device 300 or may be provided as an independent unit. The ultrasound source 310 is configured to apply ultrasound to the sample volume 106 and may for example comprise a sonotrode with one or more ultrasonic transmitters that is configured to be brought in contact with the mount 302 and/or the microfluidic system 304. In the example of Fig. 3, the ultrasound source 310 is configured to apply the ultrasound to the sample volume 106 in a targeted fashion, for example by bringing the sonotrode in contact with a sidewall of the sample volume 106 and/or an ultrasound emitter of the microfluidic system 304 such as the ultrasound emitter 126 of the microfluidic system 100 of Fig. 1 In other examples, the ultrasound source 310 may be configured to apply the ultrasound to the entire microfluidics system 304, e.g. via the mount 302. In one example, the ultrasound source 310 or a thereof, for example the Sonotrode and/or one or more ultrasonic transmitters, may be integrated into the mount 302.

The device 300 also comprises an actuator 312 that is configured to move a movable element 202 within the sample volume 106, wherein the movable element 202 may be provided as part of the microfluidic system 304 or of the device 300. The movable element 202 may for example be a piston with a cover member that is configured to seal off the insertion opening 106A of the sample volume 106 and to be advanced into the sample volume 106 by the actuator 312 as illustrated in Fig. 3, e.g. such that the cover member slides along sidewalls of the sample volume 106 while sealing off a respective portion of the sample volume 106. The actuator 312 may for example comprise an electric motor (not shown) that is configured to be mechanically coupled to the movable element 202. The electric motor may for example move a rod or shaft that is in contact with the movable element 202. In another example, the actuator 312 may comprise a piezo actuator that is in contact with or mechanically coupled to the movable element 202. In yet another example, the actuator 312 may comprise a hydraulic pressure source that is configured to apply a positive or negative pressure to the movable element 202 via a hydraulic fluid in order to move the movable element 202. The controller 306 is configured to control the actuator 312 by generating corresponding control signals to move the movable element within the sample volume 106, in particular for moving the tissue sample 102 to a specified position within the sample volume 106.

The controller 306 may further be configured to provide other functions, for example to control the mount 302 and/or elements of the microfluidic system 304 such as a cell sorter (not shown) and/or one or more valves. The controller 306 may in particular be configured to control the quantitative phase-contrast microscope 400 and/or to obtain and analyze phase shift images taken with the quantitative phase-contrast microscope 400, e.g. as detailed below with reference to Fig. 4.

Fig. 4 depicts a schematic illustration of the quantitative phase-contrast microscope 400 of the device 300 of Fig. 3 in accordance with an exemplary embodiment of the invention. The quantitative phase-contrast microscope 400 is a digital holographic microscope that is configured to take phase shift images as well as amplitude or intensity images of a sample, in particular of single cells 122 and/or cell aggregates in the measurement volume 114 of the microfluidic system 304.

The digital holographic microscope 400 comprises an imaging system 402 with an objective 404, a holographic imaging system 406, and an imaging lens 408. The imaging system 402 is configured to image a focal plane of the imaging system 402 onto a camera 410, e.g. through a detection window 118 in a top surface of the microfluidic system 304. The camera may for example be a CCD or CMOS camera. The focal plane of the imaging system 402 lies within the measurement volume 114, preferably in a plane along which the carrier fluid flow 124A flows. The microscope 400 further comprises an illumination source 412 for illuminating the measurement volume 114 and a controller 414 that is configured to obtain images from the camera 410. The controller 414 may further be configured to control the holographic imaging system 406, the camera 410, and/or the illumination source 412.

The objective 404 may for example be a high-NA objective having a numerical aperture larger than 0.4, in some examples larger than 0.5. A depth of field of the objective 404 may be smaller than 10 µm, preferably smaller than 5 µm, wherein the depth of field may e.g. be defined as a minimum Rayleigh length of a laser beam focused by the objective 404, for example at a wavelength of 1064 nm. This may allow for precise focusing on objects such as cells in the measurement volume 114, e.g. in a hydrodynamically focused carrier fluid flow 124A, and may provide sufficient spatial resolution to resolve morphological features of the cells.

The holographic imaging system 406 is configured to create an interference image on the camera 410, e.g. by interfering an imaging beam with a reference beam on the camera 410. The imaging beam may for example be a beam that passes through the measurement volume 114 and propagates from the focal plane of the imaging system 402 to the camera 410 along a first optical path through the holographic imaging system 406. The reference beam may for example be a beam propagating to the camera 410 along a second optical path through the holographic imaging system 406. In some examples, the reference beam may be split from the imaging beam, e.g. using a beam splitter or a diffraction grating, i.e. the reference beam may also have passed through the measurement volume 114 and may propagate to the camera 410 from the focal plane of the imaging system 402 along the second optical path. In other examples, the reference beam may not have passed through the measurement volume 114 and may e.g. be split from the imaging beam in front of the measurement volume 114.

The digital holographic microscope 400 may be an on-axis digital holographic microscope, in which the imaging beam and the reference beam propagate along the same axis when interfering, i.e. interfere at an angle of 0°. The controller 414 may for example be configured to extract or reconstruct a phase shift image as well as an intensity image of the sample from a plurality of interference images, e.g. by varying a phase offset between the reference and imaging beams using the holographic imaging system 406. Preferably, the microscope 400 is an off-axis digital holographic microscope, in which the imaging beam and the reference beam interfere under an angle. In this case, the controller 414 may be configured to extract or reconstruct the phase shift image as well as the intensity image of the sample from a single interference image.

The illumination source 412 is configured to illuminate the measurement volume 114, e.g. through an illumination window in a bottom surface of the microfluidic system 304 opposing the detection window 118. The illumination source 412 is configured to illuminate the measurement volume 114 by spatially and/or temporally coherent light, wherein a coherence length of the illumination light may for example be larger than a field of view of the microscope 400 and a coherence time of the illumination light may for example be larger than a time delay between the image and reference beams, i.e. such that an interference pattern can be observed on the camera 410. The illumination source 412 may for example comprise a laser or a light-emitting diode and may be configured to emit monochromatic light, e.g. at a wavelength between 500 nm and 1100 nm.

The controller 414 may be implemented in hardware, software, or a combination thereof. The controller 414 may be configured to provide the phase shift and intensity images to another device, for example the controller 306 of the device 300. In some examples, the controller 414 or a part thereof may be integrated into the controller 306. In addition to reconstructing the phase shift and intensity images, the controller 414 may further be configured to analyze the phase shift and/or intensity images. The controller 414 may for example be configured to determine a cell type of one or more cells in the images, e.g. by determining one or more morphological parameters of the cells from the phase shift and/or intensity images and determining the cell type based on the morphological parameters. The controller 414 may be configured to analyze the phase shift and/or intensity images using computer vision techniques and may for example be configured to determine a cell type of one or more cells from a phase shift image using a neural-network-based classifier.

In some examples, the microscope 400 may further be configured to take images, in particular intensity images, of the single cells 122 and/or the cell aggregates in the measurement volume 114 using other imaging techniques, for example bright-field microscopy, fluorescence microscopy, and/or super-resolution microscopy. Alternatively, the device 300 may also comprise a second microscope (not shown) configured to take such images.

In some embodiments, the controller 306 of the device 300 is configured to control a cell sorter of the microfluidic system 304 based on the determined cell type of the one or more cells, e.g. to selectively separate cells of a certain type from the other cells in the carrier fluid flow 124A. The controller 306 may for example be configured to determine whether a cell of the respective type is contained in a phase shift image. The controller 306 may be configured to determine an arrival time of the respective cell at the cell sorter, e.g. based on a position of the cell in the phase shift image and a flow velocity of the carrier fluid flow 124. The controller 306 may be configured to provide a control signal such as an electrical voltage to the cell sorter at the arrival time, for example to deflect the cell to one of a plurality of channels.

Fig. 5 shows a flow chart of a method 500 of analyzing a tissue sample using a quantitative phase-contrast microscope according to an exemplary embodiment of the invention. The method 500 may for example be implemented with the device 300 of Fig. 3 and the microfluidic system 200 of Fig. 2, which are used as examples for illustration purposes in the following. This is, however, not intended to be limiting in any way and the method 500 may also be implemented using a different device with a quantitative phase-contrast microscope and/or using a different microfluidic system, for example the microfluidic system 100 of Fig. 1 or the microfluidic system 304 of Fig. 3. Furthermore, the method 500 is not limited to the order of execution shown in the flowchart of Fig. 5. As far as technically feasible, the method 500 may be executed in an arbitrary order and parts thereof maybe executed simultaneously at least part.

In step 502, a tissue sample 102 is provided in the sample volume 106 of the microfluidic system 200. The tissue sample 102 comprises a plurality of biological cells forming a continuous tissue material, in which the cells are linked to each other by an extracellular matrix. The tissue sample 102 may for example be a biopsy sample that has previously been extracted from a patient, e.g. by incisional or excisional biopsy. Preferably, the tissue sample is a needle biopsy sample, which may either have been directly extracted from a patient or from a larger piece of tissue that has already been removed from the patient's body. The tissue sample 102 may for example be provided in the sample volume 106 by inserting the tip of a biopsy needle containing the tissue sample 102 into the sample volume 106 through the insertion opening 106A and releasing the tissue sample 102 from the biopsy needle. Subsequently, the sample volume 106 may be sealed by placing the cover member 202A in the insertion opening 106A. In some examples, step 502 may comprise rinsing the tissue sample 102 either prior to or after providing the tissue sample 102 in the sample volume 106, e.g. to remove blood from the tissue sample 102.

In step 504, at least a part of the tissue sample 102 is dissolved into single cells 122 and/or cell aggregates, wherein the cell aggregates may for example be small clusters comprising between 2 and 20 cells each. For this, a carrier fluid, e.g. an isotonic fluid and/or a buffer solution, for example a phosphate-buffered saline (PBS) or a minimal essential medium such as Dulbecco's modified Eagle's medium (DMEM), is provided to the sample volume 106, for example through the input port 110 and/or the insertion opening 106A. The carrier fluid may for example be provided by the controller 306 using the microfluidics unit 308. The fluid may fill the entire sample volume 102 and may completely surround the tissue sample 102.

The tissue sample 102 may for example be dissolved by enzymatic digestion. For this, a dissolving fluid may be supplied to the sample volume 106, e.g. by the controller 306 using the microfluidics unit 308. The dissolving fluid comprises one or more enzymes for an enzymatic digestion of the tissue sample 102. The one or more enzymes may for example comprise one or more collagenases, e.g. collagenase type II, and/or trypsin. In some examples, the carrier fluid may comprise the one or more enzymes, i.e. may also act as the dissolving fluid, or the dissolving fluid may be supplied to the reservoir 308A or a channel connecting the reservoir 308A to the input port 110 to admix the dissolving fluid to the carrier fluid prior to providing the carrier fluid to the sample volume 106. The tissue sample 102 may be exposed to the one or more enzymes for a predetermined amount of time, e.g. between 5 min and 60 min, in one example between 20 min and 40 min. The exposure time may for example be chosen based on the size of the tissue sample 102, the type of tissue in the tissue sample 102, and/or the one or more enzymes. In some embodiments, the one or more enzymes are removed from the sample volume 106 before proceeding to step 506. In other examples, the tissue sample 102 may be continuously exposed to the one or more enzymes during some or all of steps 506 to 512, e.g. until the tissue sample 102 is dissolved completely.

In some examples, the one or more enzymes may be supplied to the sample volume 106 at different points in time and/or the tissue sample 102 may be exposed to the one or more enzymes for different amounts of time. For example, a first enzyme may be supplied to the sample volume 106 at a first point in time and a second enzyme may be supplied to the sample volume 106 at a second point in time later than the first point in time, wherein the first enzyme may or may not be removed from the sample volume 106 prior to supplying the second enzyme. Additionally or alternatively, the tissue sample may be exposed to the first enzyme for a first exposure time and to the second enzyme for a second exposure time different from the first exposure time. For example, one of the enzymes may be collagenase type II and the other enzyme may be trypsin, wherein the exposure time for trypsin may be shorter than the exposure time for collagenase type II, e.g. to avoid damaging surface proteins of the cells due to a prolonged exposure of the tissue sample 102 to trypsin.

Additionally or alternatively, the tissue sample 102 may be dissolved by applying ultrasound to the tissue sample, e.g. by the controller 306 using the ultrasound source 310. The ultrasound may for example have a frequency between 10 kHz and 10 MHz, in one example between 20 kHz and 100 kHz, and may for example be applied for a predetermined amount of time, e.g. between 30 s and 60 min. The ultrasound may be applied continuously or as a sequence of pulses, e.g. during the predetermined amount of time. In some embodiments, the tissue sample 102 may be permanently or repeatedly exposed to ultrasound during some or all of steps 506 to 512, e.g. until the tissue sample 102 is dissolved completely. The application of ultrasound may be combined with the enzymatic digestion described above, e.g. by applying ultrasound prior to, during, and/or after the enzymatic digestion.

In step 506, a flow 124A of the carrier fluid from the sample volume 106 to the measurement volume 114 is generated. The controller 306 may for example control a pump and/or one or more valves of the microfluidics unit 308 to supply the carrier fluid from the reservoir 308A to the input port 110 to generate the carrier fluid flow 124A through the microfluidic system 200 from the input port 110 to the output ports 116A, 116B. The carrier fluid flow 124A may transport single cells 122 and/or cell aggregates separated from the tissue sample 102 from the sample volume 106 to the measurement volume 114. In some examples, the carrier fluid flow 124A may be a continuous flow, which is for example maintained for a predetermined amount of time, e.g. while dissolving the tissue sample 102. In other examples, the carrier fluid flow 124A may be a pulsed flow. The pulsed flow may e.g. comprise an alternating sequence of periods in which the carrier fluid flow 124A is generated and maintained to transport the single cells and/or cell aggregates to the measurement volume 114 and periods in which the carrier fluid flow 124A is stopped, e.g. to further dissolve the tissue sample 102 before transporting the single cells and/or cell aggregates to the measurement volume 114 again. In one example, the carrier fluid flow 124A maybe maintained for a period between 1 s and 60 s before being stopped for a period between 1 min and 30 min. As mentioned above, the carrier fluid may also be or comprise the dissolving fluid for the enzymatic digestions of the tissue sample, i.e. may comprise the one or more enzymes.

In step 508, a first set of phase shift images of the single cells 122 and/or cell aggregates in the measurement volume 114 is taken using the quantitative phase-contrast microscope 400. The first set of phase shift images may e.g. be a single image or may be a plurality of images. The first set of phase shift images may in particular be a continuous video stream of images, e.g. at a repetition rate between 15 Hz and 240 Hz, which may be recorded while the single cells 122 and/or cell aggregates are transported through the measurement volume 114 by the carrier fluid flow 124A.

Subsequently, in step 510, the tissue sample 102 is moved relative to an outlet of the sample volume 102 that is in fluid communication with the measurement volume 114, e.g. relative to the opening of the transport channel 112B in the sidewall of the sample volume 106. The tissue sample 102 may for example be moved from a first position in the sample volume 102, e.g. the position of the tissue sample 102 in steps 506 and/or 508, to a second position. For moving the tissue sample 102, the piston 202 with the movable element 202A may be advanced from the insertion opening 106A into the sample volume 106, thereby pushing the tissue sample 102 further into the sample volume 106. The tissue sample 102 may for example be moved between 50 µm and 1 mm between the first and second positions. In one example, a front portion of the tissue sample 102 may be adjacent to the opening of the transport channel 112B and exposed to the carrier fluid flow 124A when the tissue sample 102 is at the first position. Accordingly, a different portion of the tissue sample 102, for example a portion adjacent to the front portion, e.g. a center portion, may be adjacent the opening of the transport channel 112B and exposed to the carrier fluid flow 124A when the tissue sample 102 is the second position. After moving the tissue sample to the second position, the dissolution of the tissue sample may be continued, e.g. through enzymes contained in the carrier fluid, by providing the dissolving fluid, and/or by applying ultrasound.

In step 512, a second set of phase shift images of the single cells 122 and/or cell aggregates in the measurement volume 114 is taken using the quantitative phase-contrast microscope 400 while the tissue sample 102 is at the second position. Similar to the first set of phase shift images, the second set of phase shift images may e.g. be a single image or may be a plurality of images, in particular a continuous video stream of images.

In some embodiments, steps 510 and 512 may be repeated continuously, e.g. to sequentially move the tissue sample 102 past the outlet of the sample volume 106. The tissue sample 102 may for example be moved sequentially in equidistant steps between 50 µm and 500 µm. By exposing different portions of the tissue sample 102 to the carrier fluid flow 124A, information about the cellular composition of the tissue sample 102 may be obtained that is spatially resolved along the longitudinal direction of tissue sample 102, corresponding to the direction along which the tissue sample 102 is moved in the sample volume 106. The tissue sample 102 may be moved sequentially until an end portion of the tissue sample 102 is adjacent to the outlet of the sample volume 106, taking a set of phase shift images at each position.

In one example, the tissue sample 102 may subsequently be moved back to the first position and the sequential scan may be repeated. As a result of the dissolution of the tissue sample 102, an outer layer of the tissue sample 102 may already have been removed, thereby exposing an inner layer of the tissue sample 102. The carrier fluid flow 124A may thus predominantly contain single cells 122 and/or cell aggregates originating from the inner layer, which may be imaged by taking another set of phase shift images. This may allow for obtaining information about the cellular composition of the tissue sample 102 that is spatially resolved along the longitudinal direction of tissue sample 102 and in a radial direction from the outer surface of the tissue sample 102 to the core of the tissue sample 102. In some embodiments, the tissue sample 102 may not be moved during execution of the method 500, but a plurality of sets of phase shift images may be taken at different points in time while dissolving the tissue sample 102.

The method 500 may further comprise additional steps. The method 500 may for example comprise generating sheath flows 124B by supplying a sheath fluid, e.g. the carrier fluid or a fluid having a different composition than the carrier fluid, to the sheath flow channels 120 in order to hydrodynamically focus the carrier fluid flow 124B, e.g. to the focal plane or a focal point of the microscope 400. Additionally or alternatively, the carrier fluid flow 124A may be focused viscoelastically, e.g. by providing a viscoelastic carrier fluid containing polymers such as polyethylene glycol or hyaluronic acid.

The method 500 may also comprise determining a cell type of one or more cells from the phase shift images, e.g. based on morphological features of the cells and/or using a machine learning classifier. In one embodiment, a cell-type specific imaging marker, for example a metal cluster attached to a cell-type specific antibody may be provided to the sample volume 106 and/or the measurement volume 114, e.g. in the carrier fluid, and the cell type may be determined using the imaging marker.

The method 500 may further comprise sorting the single cells 122 and/or cell aggregates using the cell sorter 204, e.g. by selectively applying an electrical voltage to the electrode 206 to deflect one or more cells 122 and/or cell aggregates in the carrier fluid flow 124A into the channel connected with the output port 116A and 116B, respectively. The electrical voltage may for example be applied such that single cells 122 and/or cell aggregates of a first cell type are deflected towards the output port 116A, whereas all other cells 122 and/or cell aggregates are deflected towards the output port 116B.

The embodiments of the present invention disclosed herein only constitute specific examples for illustration purposes. The present invention can be implemented in various ways and with many modifications without altering the underlying basic properties. Therefore, the present invention is only defined by the claims as stated below.

### LIST OF REFERENCE SIGNS

100 - microfluidic system
102 - tissue sample
104 - substrate
106 - sample volume
106A - insertion opening
108 - cover member
110 - input port
112A - input channel
112B - transport channel
112C -output channel
114 - measurement volume
116, 116A, 116B - output port
118 - detection window
120 - sheath flow channel
122 - single cell
124A - carrier fluid flow
124B - sheath flow
126 - ultrasound emitter
200 - microfluidic system
202 - movable element/piston
202A - cover member
204 - cell sorter
206 - electrode
300 - device
302 - mount
304 - microfluidic system
306 - controller
308 - microfluidics unit
308A - reservoir
310 - ultrasound source
312 - actuator
400 - quantitative phase-contrast microscope
402 - imaging system
404 - objective
406 - holographic imaging system
408 - imaging lens
410 - camera
412 - illumination source
500 - method of analyzing a tissue sample
502 - step of providing the tissue sample
504 - step of dissolving the tissue sample at least in part
506 - step of generating a flow of a carrier fluid
508 - step of taking a first set of phase shift images
510 - step of moving the tissue sample in the sample volume
512 - step of taking a second set of phase shift images

## Claims

1. A method (500) of analyzing a tissue sample (102) using a quantitative phase-contrast microscope (400), in particular a digital holographic microscope, the method (500) comprising:
providing the tissue sample (102) in a sample volume (106) of a microfluidic system (100, 200, 304), wherein the tissue sample (102) comprises a plurality of biological cells forming a continuous tissue material;
dissolving at least a part of the tissue sample (102) into single cells (122) and/or cell aggregates in a carrier fluid in the sample volume (106);
generating a flow (124A) of the carrier fluid from the sample volume (106) to a measurement volume (114) of the microfluidic system (100, 200, 304); and
taking a first phase shift image of the single cells (122) and/or cell aggregates in the measurement volume (114) with the quantitative phase-contrast microscope (400).

2. The method (500) of claim 1, wherein the tissue sample (102) is dissolved by enzymatic digestion and/or by applying ultrasound to the tissue sample (102).

3. The method (500) of claim 1 or 2, further comprising moving the tissue sample (102) relative to an outlet of the sample volume (106) that is in fluid communication with the measurement volume (114) while dissolving the tissue sample (102), wherein preferably:
the tissue sample (102) is moved at an angle relative to a flow direction of the carrier fluid in the sample volume (106), in particular perpendicular to the flow direction of the carrier fluid in the sample volume (106); and/or
the first phase shift image of the single cells (122) and/or cell aggregates in the measurement volume (114) is taken when the tissue sample (102) is at a first position relative to the outlet of the sample volume (106) and the method (500) further comprises taking a second phase shift image of the single cells (122) and/or cell aggregates in the measurement volume (114) when the tissue sample (102) is at a second position relative to the outlet of the sample volume (106).

4. The method (500) of any one of the preceding claims, wherein:
the first phase shift image is taken at a first point in time while dissolving the tissue sample (102); and
the method (500) further comprises taking a third phase shift image of the single cells (122) and/or cell aggregates in the measurement volume (114) at a second point in time while dissolving the tissue sample (102).

5. The method (500) of any one of the preceding claims, further comprising:
providing an imaging marker, in particular a cell-type specific imaging marker, in the carrier fluid for labelling the single cells (122) and/or cell aggregates; and/or
performing molecular spectroscopy on the single cells (122) and/or cell aggregates; and/or
determining a cell type of one or more cells (122) from the first phase shift image; and/or
hydrodynamic and/or viscoelastic focusing of the single cells (122) and/or cell aggregates in the measurement volume (114).

6. The method (500) of any one of the preceding claims, wherein the tissue sample (102) is a biopsy sample, in particular a needle biopsy sample.

7. A microfluidic system (100, 200, 304) for analyzing a tissue sample (102) comprising a plurality of biological cells forming a continuous tissue material using a method (500) according to any one of the preceding claims, the microfluidic system (100, 200, 304) comprising:
a sample volume (106) configured to receive the tissue sample (102) through an insertion opening (106A);
an input port (110) that is in fluid communication with the sample volume (106) and configured to receive a carrier fluid;
a measurement volume (114) in fluid communication with the sample volume (106) via a microfluidic transport channel (112B); and
a detection window (118) for taking phase shift images of cells (122) in the measurement volume (114) using a quantitative phase-contrast microscope (400), in particular a digital holographic microscope.

8. The microfluidic system (200, 304) of claim 7, further comprising a movable element (202) that is configured to be moved within the sample volume (106) for moving the tissue sample (102) in the sample volume (106), in particular wherein the movable element (202) is a piston comprising a cover member (202A) that is configured to seal off the insertion opening (106A) and to slide along the sample volume (106) for moving the tissue sample (102) along the sample volume (106).

9. The microfluidic system (100, 200, 304) of claim 7 or 8, further comprising:
an input channel (112A) connecting the input port (110) with the sample volume (106), wherein openings of the input and transport channels (112A, 112B) are arranged on opposing sidewalls of the sample volume (106) and aligned with each other along a direction of flow of the input channel (112A); and/or
one or more sheath flow channels (120) in fluid communication with the measurement volume (114), wherein the one or more sheath flow channels (120) are configured to generate one or more sheath flows (124B) for hydrodynamically focusing the carrier fluid in the measurement volume (114); and/or
a cell sorter (206) that is configured to sort single cells (122) based on a control signal and/or based on electric, magnetic, and/or hydrodynamic properties of the cells.

10. A device (300) for analyzing a tissue sample (102) comprising a plurality of biological cells forming a continuous tissue material using a method (500) according to any one of claims 1 to 6, the device (300) comprising:
a mount (302) configured to receive a microfluidic system (100, 200, 304) comprising a sample volume (106) configured to receive the tissue sample (102) and a measurement volume (114) in fluid communication with the sample volume (106);
a quantitative phase-contrast microscope (400) configured to take phase shift images of cells (122) in the measurement volume (114); and
a controller (306) configured to control means (308, 310) for dissolving at least a part of the tissue sample (102) into single cells (122) and/or cell aggregates in a carrier fluid in the sample volume (106) and for generating a flow (124A) of the carrier fluid from the sample volume (106) to the measurement volume (114).

11. The device (300) of claim 10, further comprising an ultrasound source (310) that is configured to apply ultrasound to the sample volume (106) of the microfluidic system (100, 200, 304), wherein the controller (306) is configured to control the ultrasound source (310) to dissolve at least a part of the tissue sample (102) by applying ultrasound to the tissue sample (102) in the sample volume (106).

12. The device (300) of claim 10 or 11, further comprising a microfluidics unit (308) that is configured to supply a fluid to the sample volume (106), wherein the controller (306) is configured to control the microfluidics unit (308) to dissolve at least a part of the tissue sample (102) by supplying a dissolving fluid comprising enzymes for an enzymatic digestion of the tissue sample (102) to the sample volume (106), in particular wherein the microfluidics unit (308) is further configured to supply a sheath fluid to the microfluidic system (100, 200, 304) for generating a sheath flow in the measurement volume (114), wherein the controller (306) is configured to control the microfluidics unit (308) to hydrodynamically focus the carrier fluid in the measurement volume (114) by supplying the sheath fluid to the microfluidic system (100, 200, 304).

13. The device (300) of any one of claims 10 to 12, further comprising an actuator (312) that is configured to move a movable element (202) within the sample volume (106), wherein the controller (306) is configured to control the actuator (312) to move the movable element (202) within the sample volume (106) for moving the tissue sample (102) within the sample volume (106), in particular wherein the device (300) further comprises a piston (202) with a cover member (202A) that is mechanically coupled to the actuator (312) and configured to be inserted into the sample volume (106), wherein the controller (306) is configured to control the actuator (312) to move the piston (202) along the sample volume (106) for moving the tissue sample (102) along the sample volume (106).

14. The device (300) of any one of claims 10 to 13, wherein the controller (306) is configured to determine a cell type of one or more cells (122) from the phase shift images, in particular wherein:
the microfluidic system (200) comprises a cell sorter (206) that is configured to sort single cells (122) based on a control signal; and
the controller (306) is configured to control the cell sorter (206) to sort the one or more cells (122) based on the cell type of the one or more cells (122) determined from the phase shift images.

15. The device (300) of any one of claims 10 to 14, wherein the quantitative phase-contrast microscope (400) is a digital holographic microscope and/or wherein the device (300) further comprises a microfluidic system (100, 200, 304) according to any one of claims 7 to 9.
